# EUROPEAN PATENT APPLICATION

(11) **EP 4 589 701 A2**
(43) Date of publication of application: **23.07.2025**
(21) Application number: 24218679.9
(22) Date of filing: 10.12.2024
(51) Int. Cl.: H01M 10/04, H01M 50/342, H01M 50/466

(54) **SECONDARY BATTERY**

(30) Priority: 19.01.2024 JP 2024006446
(71) Applicant: Prime Planet Energy & Solutions, Inc., Chuo-ku, Tokyo 103-0022 (JP)
(72) Inventor: MAEDA, Tomonori, Tokyo 103-0022 (JP)
(74) Representative: Kuhnen & Wacker Patent- und Rechtsanwaltsbüro PartG mbB

(57) **Abstract**

A secondary battery in which a problem in a conventional art is solved is provided. A secondary battery according to the present disclosure includes an electrode body that includes a plurality of first electrode plates, a plurality of second electrode plates, and a separator disposed between the first electrode plate and the second electrode plate, an electrolyte solution, and a case that accommodates these. The separator is bent in a zigzag manner. The separator includes a first bent part folded at an end part of the first electrode plate and a second bent part folded at an end part of the second electrode plate. A plurality of the first bent parts are disposed on one side of a pair of side surfaces of the electrode body that face each other, and a plurality of the second bent parts are disposed on the other side of the pair of side surfaces of the electrode body that face each other. The separator includes a cover part that covers outer surfaces of the plurality of first bent parts. Outer surfaces of the second bent part are not covered with the separator. In the electrode body, the separator exists on both outermost surfaces in a direction where the first electrode plates and the second electrode plates are stacked.

## Description

### TECHNICAL FIELD

The present disclosure relates to a secondary battery.

### BACKGROUND

As one mode of an electrode body included in a secondary battery, a stacked-type electrode body in which a plurality of positive electrodes and a plurality of negative electrodes are stacked alternately through a separator has been known. In one of the known modes of the stacked-type electrode body, the separator is disposed in a zigzag manner so as to exist between the positive electrode and the negative electrode (for example, see Patent Document 1). Patent Document 1 discloses various modes of the electrode body in which the separator is disposed in the zigzag manner.

### CITATION LIST

### PATENT DOCUMENTS

Patent Document 1: WO2019/064740

### SUMMARY

Various modes disclosed in the conventional art have, however, at least any of a problem that short-circuit may occur due to a fragment detached from a negative electrode active material layer and a problem that the impregnation of the electrode body with an electrolyte solution is inferior.

In view of the above, the present disclosure provides a secondary battery in which the problem of the conventional art is solved.

A secondary battery according to the present disclosure includes: an electrode body that includes a plurality of first electrode plates, a plurality of second electrode plates with a polarity different from a polarity of the first electrode plates, and a separator disposed between the first electrode plate and the second electrode plate; an electrolyte solution; and a case that accommodates the electrode body and the electrolyte solution. The separator has a band-like shape and is bent in a zigzag manner. The separator includes a first bent part folded at an end part of the first electrode plate and a second bent part folded at an end part of the second electrode plate. A plurality of the first bent parts are disposed on one side surface side of a pair of side surfaces of the electrode body that face each other. A plurality of the second bent parts are disposed on the other side surface side of the pair of side surfaces of the electrode body that face each other. The separator includes a cover part that covers outer surfaces of the plurality of first bent parts. Outer surfaces of the second bent parts are not covered with the separator. In the electrode body, the separator exists on both outermost surfaces in a direction where the first electrode plates and the second electrode plates are stacked.

With such a structure, a secondary battery in which the problem in the conventional art is solved can be provided. That is to say, with such a structure, a secondary battery in which the occurrence of the short-circuit due to the detached fragment of the negative electrode active material layer is suppressed and the impregnation of the electrode body with the electrolyte solution is excellent can be provided.

### BRIEF DESCRIPTION OF THE DRAWINGS

FIG. 1 is a perspective view schematically illustrating a secondary battery according to one embodiment corresponding to one example of a secondary battery according to the present disclosure;
FIG. 2 is a perspective view in which the secondary battery in FIG. 1 is inverted in an up-down direction;
FIG. 3 is a cross-sectional view schematically illustrating an internal structure of the secondary battery in FIG. 1, which is taken along a main surface of a battery case of the secondary battery;
FIG. 4 is a perspective view of the secondary battery in FIG. 1, which is schematically illustrated through a case main body;
FIG. 5 is a cross-sectional view schematically illustrating a structure of an electrode body of the secondary battery in FIG. 1;
FIG. 6 is a cross-sectional view schematically illustrating an internal structure of the secondary battery in FIG. 1, which is perpendicular to a long side surface of the battery case of the secondary battery and perpendicular to a bottom surface thereof; and
FIG. 7 is a developed view of an insulating sheet used in the secondary battery in FIG. 1.

### DETAILED DESCRIPTION

Embodiments of the present disclosure will hereinafter be described with reference to the drawings. Matters that are not mentioned in the present specification and that are necessary for the implementation of the present disclosure can be grasped as design matters of those skilled in the art based on the prior art in the relevant field. The present disclosure can be implemented on the basis of the contents disclosed in the present specification and common technical knowledge in the relevant field. It should be noted that in the drawings below, the members and parts with the same operation are explained by being denoted by the same reference sign. In addition, the size relation (length, width, thickness, etc.) in each drawing does not necessarily reflect the actual size relation. Moreover, in the present specification, the numerical range expressed as "A to B" includes A and B.

It should be noted that the term "secondary battery" in this specification refers to an electrical energy storage device capable of being charged and discharged repeatedly. It should be noted that, in the present specification, the term "lithium ion secondary battery" refers to a secondary battery that uses lithium ions as a charge carrier and can be charged and discharged by transfer of charges accompanying with the lithium ions between positive and negative electrodes.

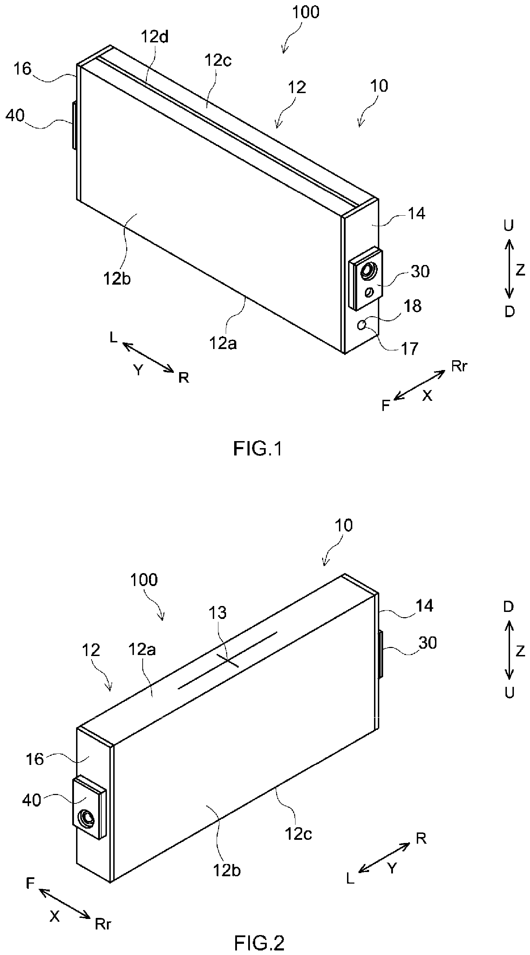

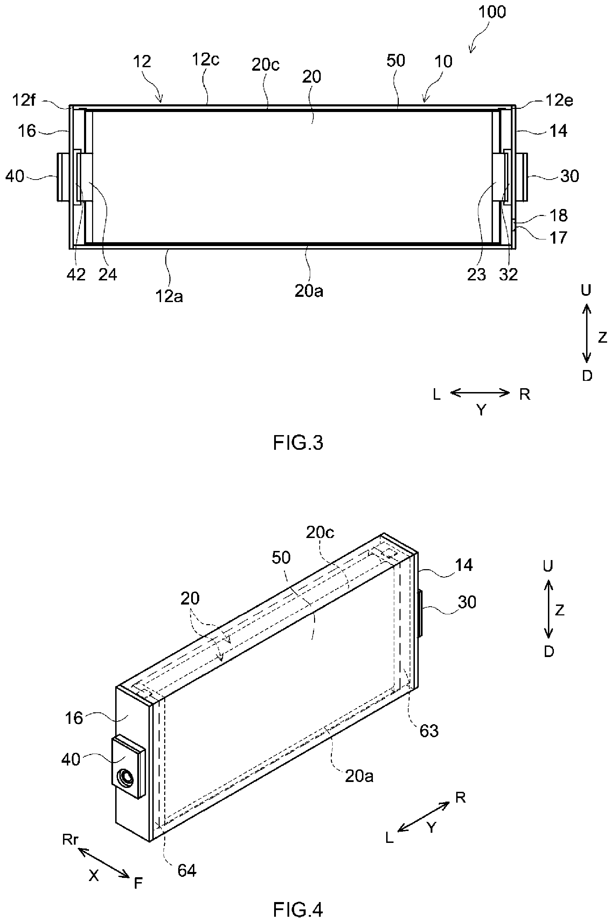

FIG. 1 is a perspective view of a secondary battery 100 according to this embodiment corresponding to one example of a secondary battery according to the present disclosure. FIG. 2 is a perspective view in which the secondary battery 100 in FIG. 1 is inverted in an up-down direction. FIG. 3 illustrates an internal structure of the secondary battery 100 in FIG. 1. It should be noted that in the following description, reference signs L, R, F, Rr, U, and D in the drawings respectively denote left, right, front, rear, up, and down, and reference signs X, Y, and Z in the drawings respectively denote a short side direction of the secondary battery 100, a long side direction that is orthogonal to the short side direction, and an up-down direction that is orthogonal to the short side direction and the long side direction.

It should be noted that U (up) and D (down) in the drawing coincide with up and down in a mode where the secondary battery 100 is normally used (in particular, installation state of an on-vehicle battery); however, the use mode of the secondary battery 100 is not limited to this. For example, in another embodiment, the secondary battery 100 may be installed upside down.

The secondary battery 100 according to this embodiment is a lithium ion secondary battery. Thus, the secondary battery 100 can have excellent battery characteristics such as high energy density and high capacity. In another embodiment, however, the secondary battery may be a secondary battery other than the lithium ion secondary battery (for example, sodium ion secondary battery or the like).

As illustrated in FIG. 1 to FIG. 3, the secondary battery 100 includes a battery case 10, an electrode body 20, and an electrolyte solution (not illustrated). Moreover, the secondary battery 100 further includes a positive electrode terminal 30, a negative electrode terminal 40, and an insulating sheet 50.

### <Battery case>

The battery case 10 is a housing that accommodates the electrode body 20 and the electrolyte solution. As illustrated in FIG. 1 and FIG. 2, the battery case 10 has an outer shape that is a flat bottomed cuboid shape here. That is to say, the battery case 10 has a square shape. Therefore, the secondary battery 100 in the illustrated example is a square type lithium ion secondary battery. However, the shape of the battery case 10 is not limited to this shape. The battery case 10 is desirably square because the space efficiency becomes high when a battery module is formed using a plurality of the secondary batteries 100.

The material of the battery case 10 may be the same as the conventionally used material (for example, metal, resin, or the like) without particular limitations. The material of the battery case 10 is desirably metal, and more desirably aluminum, an aluminum alloy, iron, or an iron alloy from the viewpoints of strength, thermal conductivity, and the like. It should be noted that the battery case 10 may be formed of a laminate film.

As illustrated in FIG. 1 to FIG. 3, the battery case 10 includes a case main body 12, a first sealing plate 14, and a second sealing plate 16. The case main body 12 has a rectangular tubular shape. As illustrated in FIG. 3, the case main body 12 includes a first opening 12e at one end part and a second opening 12f at the other end part. The first sealing plate 14 seals the first opening 12e and the second sealing plate 16 seals the second opening 12f. The battery case 10 is integrated in such a way that the first sealing plate 14 and the second sealing plate 16 are joined (for example, joined by welding) to the case main body 12 at the first opening 12e and the second opening 12f, respectively. The battery case 10 is hermetically sealed. Therefore, the secondary battery 100 is a sealed type battery.

The battery case 10 includes a pair of first surfaces, a pair of second surfaces, and a pair of third surfaces. As illustrated in FIG. 1, the case main body 12 includes a bottom surface 12a with a substantially rectangular shape, a pair of long side surfaces 12b extending from long sides of the bottom surface 12a and facing each other, and a top surface 12c connecting upper end parts of the pair of long side surfaces 12b. The top surface 12c has a substantially rectangular shape. The top surface 12c faces the bottom surface 12a. Here, the top surface 12c and the bottom surface 12a constitute the pair of first surfaces, and the pair of long side surfaces 12b constitute the pair of second surfaces. It should be noted that the area of the long side surface 12b is desirably larger than the area of the bottom surface 12a and larger than the area of the top surface 12c. For example, the bottom surface 12a and the top surface 12c can constitute the pair of short side surfaces. The case main body 12 is formed by, for example, bending one sheet of metal plate into a tubular shape and joining (for example, joining by welding) a j oint. In the illustrated example, a weld-joining part 12d exists on the top surface 12c. It should be noted that the weld-joining part 12d may exist at the bottom surface 12a or at the long side surface 12b.

As illustrated in FIG. 2, the bottom surface 12a of the case main body 12 includes a gas exhaust valve 13. The gas exhaust valve 13 is configured to fracture when pressure inside the battery case 10 reaches a predetermined value or more and discharge a gas in the battery case 10 to the outside. It should be noted that although one gas exhaust valve 13 is provided in this embodiment, two or more gas exhaust valves 13 may be provided. Moreover, although the gas exhaust valve 13 is provided on the bottom surface 12a in this embodiment, the present disclosure is not limited to this example. The gas exhaust valve 13 may be provided on other surface than the bottom surface 12a, for example the long side surface 12b, the top surface 12c, the sealing plate 14, or the like in another embodiment. Alternatively, in another embodiment, the secondary battery 100 may be installed inversely in the up-down direction relative to the arrangement in the drawing and the gas exhaust valve may face upward by switching the bottom surface 12a and the top surface 12c. The area of the gas exhaust valve 13 may be determined arbitrarily.

In this embodiment, the gas exhaust valve 13 is a cross-shaped notch. However, the shape of the gas exhaust valve 13 is not limited in particular. In another embodiment, the gas exhaust valve 13 may be, for example, a linear (only longitudinal line or lateral line) notch, a conventionally known elliptical valve (with a notch inside) or circular valve (with a notch inside), or the like. The size (for example, length, depth, or the like) of the notch is arbitrarily set and can be determined as appropriate in consideration of the pressure resistance or the like of the battery case 10, for example.

The first sealing plate 14 and the second sealing plate 16 are plate-shaped members that seal the first opening 12e and the second opening 12f of the case main body 12. The first sealing plate 14 and the second sealing plate 16 have a substantially rectangular shape in a plan view. Here, the first sealing plate 14 and the second sealing plate 16 constitute the pair of third surfaces.

The first sealing plate 14 includes a liquid injection hole 17. The liquid injection hole 17 is used to inject the electrolyte solution into the battery case 10 after the first sealing plate 14 and the second sealing plate 16 are assembled to the case main body 12. Although the liquid injection hole 17 is provided below the positive electrode terminal 30, the position where the liquid injection hole 17 is provided at the first sealing plate 14 is not limited to this position. The liquid injection hole 17 is sealed with a sealing member 18 after the electrolyte solution is injected. It should be noted that although the liquid injection hole 17 is provided at the first sealing plate 14 in this embodiment, the liquid injection hole 17 may alternatively be provided at the second sealing plate 16 or the case main body 12. In addition, although the liquid injection hole 17 is provided on a surface different from that of the gas exhaust valve 13 in this embodiment, the liquid injection hole 17 may alternatively be provided on the same surface as that of the gas exhaust valve 13.

### <Electrode terminal>

The positive electrode terminal 30 and the negative electrode terminal 40 are fixed to the battery case 10. The positive electrode terminal 30 and the negative electrode terminal 40 are fixed to surfaces of the battery case 10 facing each other here. Specifically, the positive electrode terminal 30 is attached to the first sealing plate 14 and the negative electrode terminal 40 is attached to the second sealing plate 16.

Specifically, the first sealing plate 14 and the second sealing plate 16 have penetration holes to which insulating members 63 and 64 (see FIG. 4) are attached, respectively. The positive electrode terminal 30 is attached to the first sealing plate 14 through the insulating member 63 and the positive electrode terminal 30 is insulated from the first sealing plate 14. The negative electrode terminal 40 is attached to the second sealing plate 16 through the insulating member 64 and the negative electrode terminal 40 is insulated from the second sealing plate 16. The insulating member 63 insulates the first sealing plate 14 and the electrode body 20 inside the battery case 10. The insulating member 64 insulates the second sealing plate 16 and the electrode body 20 inside the battery case 10.

It should be noted that although the positive electrode terminal 30 and the negative electrode terminal 40 are provided at the first sealing plate 14 and the second sealing plate 16, respectively in this embodiment, the arrangement of the positive electrode terminal 30 and the negative electrode terminal 40 is not limited to this example. In another embodiment, both the positive electrode terminal 30 and the negative electrode terminal 40 may be provided at one of the first sealing plate 14 and the second sealing plate 16. The the positive electrode terminal 30 and the negative electrode terminal 40 may be provided at the case main body 12. In addition, although the positive electrode terminal 30 and the negative electrode terminal 40 are provided on the surfaces different from that of the gas exhaust valve 13 in this embodiment, the positive electrode terminal 30 and the negative electrode terminal 40 may alternatively be provided on the same surface as that of the gas exhaust valve 13.

However, in the case of providing the positive electrode terminal 30 and the negative electrode terminal 40 at the first sealing plate 14 and the second sealing plate 16, respectively as described in this embodiment, the height of the secondary battery 100 (that is, the size in the Z direction in the drawing) can be reduced and the battery with the high volume energy density can be easily obtained. In this case, it is easy to configure the battery module with the high volume energy density particularly in the application for the vehicle.

The positive electrode terminal 30 and the negative electrode terminal 40 are exposed to outer surfaces of the first sealing plate 14 and the second sealing plate 16, respectively. Here, the positive electrode terminal 30 and the negative electrode terminal 40 are disposed on an axial line extending in the long side direction Y and passing centers of the first sealing plate 14 and the second sealing plate 16. However, the axial line may alternatively deviate from the centers of the first sealing plate 14 and the second sealing plate 16 to, for example, the short side direction X in another embodiment. Further alternatively, the positive electrode terminal 30 and the negative electrode terminal 40 may be disposed off the axial line. For example, one of the positive electrode terminal 30 and the negative electrode terminal 40 may deviate to one side in the short side direction X and the other may deviate to the other side in the short side direction X.

The positive electrode terminal 30 is desirably made of metal and more desirably made of aluminum or an aluminum alloy. The negative electrode terminal 40 is desirably made of metal and more desirably made of copper or a copper alloy.

The electrode body 20 includes, at one end part, positive electrode current collection tabs electrically connected to a positive electrode 23 and the positive electrode current collection tabs are collectively attached to a positive electrode current collection member 32. The electrode body 20 includes, at the other end part, negative electrode current collection tabs electrically connected to a negative electrode 24 and the negative electrode current collection tabs are collectively attached to a negative electrode current collection member 42. Inside the battery case 10, the positive electrode current collection member 32 is attached to the first sealing plate 14 and is electrically connected to the positive electrode terminal 30. Inside the battery case 10, the negative electrode current collection member 42 is attached to the second sealing plate 16 and is electrically connected to the negative electrode terminal 40.

In this manner, the positive electrode terminal 30 is electrically connected to the positive electrode 23 of the electrode body 20 through the positive electrode current collection tabs and the positive electrode current collection member 32 inside the battery case 10. The negative electrode terminal 40 is electrically connected to the negative electrode 24 of the electrode body 20 through the negative electrode current collection tabs and the negative electrode current collection member 42 inside the battery case 10. It should be noted that the structure of electrically connecting the positive electrode terminal 30 and the negative electrode terminal 40 respectively to the positive electrode 23 and the negative electrode 24 of the electrode body 20 is not limited to the illustrated one.

### <Electrode body>

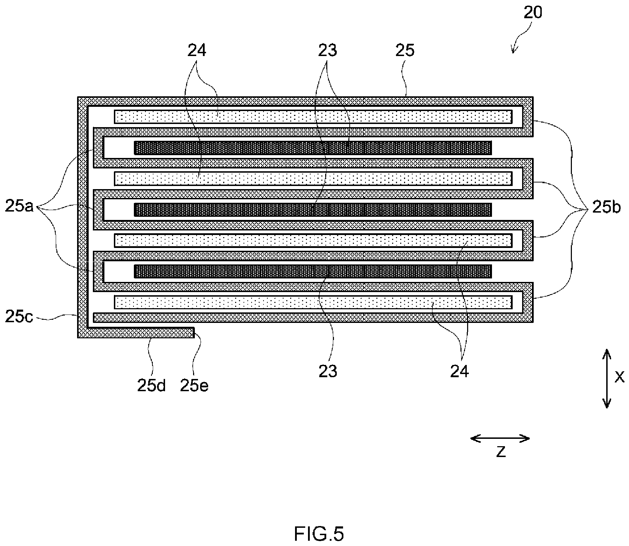

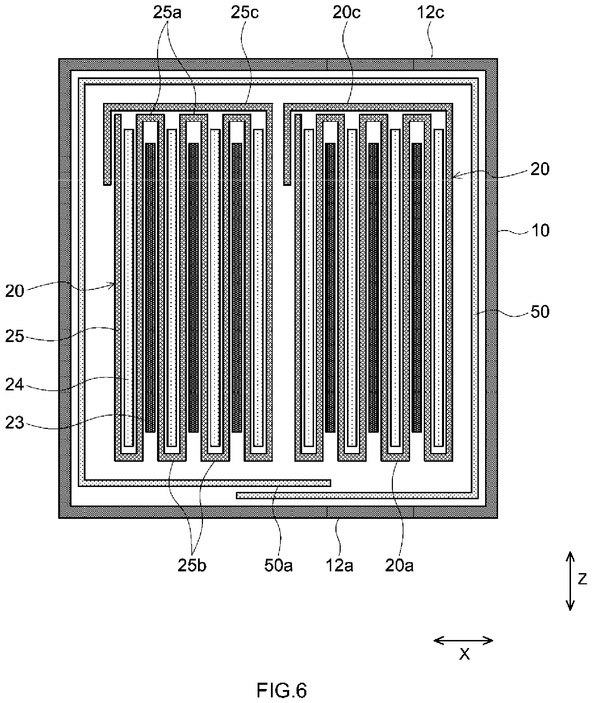

The electrode body 20 is accommodated inside the battery case 10. FIG. 4 is a perspective view of the secondary battery 100, which is schematically illustrated through the case main body 12. FIG. 5 is a schematic cross-sectional view of the electrode body 20 taken along the thickness direction of the electrode body 20, in which the electrode body 20 is simplified while the direction thereof is changed. FIG. 6 is a schematic cross-sectional view of the electrode body 20, in which the internal structure of the battery case 10 is simplified, which is taken along the X direction (the thickness direction of the electrode body 20, in other words, the direction where the positive electrode 23 and the negative electrode 24 are stacked) and the Z direction in FIG. 1.

Since these drawings are the schematic views, a main surface of the positive electrode 23 and the separator 25 are illustrated apart from each other and a main surface of the negative electrode 24 and the separator 25 are illustrated apart from each other. This is in order to make it easy to view each member, and in fact, the main surface of the positive electrode 23 and the separator 25 are in contact with each other and the main surface of the negative electrode 24 and the separator 25 are in contact with each other. Moreover, in fact, parts of the separator 25 can be in contact with each other.

As illustrated in FIG. 4 and FIG. 6, the electrode body 20 is disposed inside the battery case 10 while being covered with the insulating sheet 50 to be described below. In this embodiment, a plurality of the electrode bodies 20 are accommodated in one battery case 10. In the example illustrated in FIG. 4 and FIG. 6, two electrode bodies 20 are accommodated in one battery case 10. In the case where the plurality of electrode bodies 20 exist in this manner, it is possible to form a flow channel for the electrolyte solution or generated gas between the electrode body 20 and the adjacent electrode body 20. It should be noted that the number of electrode bodies 20 to be accommodated in one battery case 10 is not limited in particular. In another embodiment, the number of electrode bodies 20 to be accommodated in one battery case 10 may be three or more, or one.

The electrode body 20 includes a plurality of the positive electrodes 23 as first electrode plates (positive electrode plates 23), a plurality of the negative electrodes 24 as second electrode plates (negative electrode plates 24) with a polarity different from that of the first electrode plates, and one separator 25. One separator 25 is disposed between the plurality of positive electrodes 23 and the plurality of negative electrodes 24, and accordingly insulates the positive electrodes 23 and the negative electrodes 24. It should be noted that, in another embodiment, the first electrode plate may be configured as the negative electrode 24 and the second electrode plate may be configured as the positive electrode 23. The electrode body 20 is a stacked-type electrode body and the impregnation with the electrolyte solution is higher than that of a wound electrode body, and in particular, the electrode body 20 is advantageous in terms of a liquid injection property of the electrolyte solution at the manufacture. In addition, by the stacked-type electrode body, a battery with high volume energy density is easily configured.

FIG. 5 illustrates an example of the three positive electrodes 23 and the four negative electrodes 24. However, the number of positive electrodes 23 and negative electrodes 24 is not limited in particular and can be determined as appropriate in accordance with the battery design. In the illustrated example, the number of negative electrodes 24 is one more than the number of positive electrodes 23. Therefore, in the electrode multilayer structure of the positive electrodes 23 and the negative electrodes 24, the outermost layers are the negative electrodes 24 on both sides. In this case, lithium contained in a positive electrode active material of the positive electrode 23 can be used sufficiently and moreover, the precipitation of lithium in the negative electrode 24 can be prevented at a high degree. It should be noted that in another embodiment, the number of positive electrodes 23 and the number of negative electrodes 24 may be the same or the number of positive electrodes 23 may be larger than the number of negative electrodes 24. For example, 20 or more of the positive electrodes 23 and 20 or more of the negative electrodes 24 may be provided.

In this embodiment, the size of the negative electrode 24 is larger than the size of the positive electrode 23. In FIG. 5, the width of the negative electrode 24 (that is, the size in the Z direction in the drawing) is larger than the width of the positive electrode 23. Thus, the precipitation of lithium in the negative electrode 24 can be prevented at a high degree. It should be noted that in another embodiment, the width of the negative electrode 24 may be the same as or smaller than the width of the positive electrode 23.

The electrode body 20 has a substantially cubic shape. As illustrated in FIG. 3 and FIG. 4, the electrode body 20 includes a first side surface 20a facing the bottom surface 12a of the case main body 12. The electrode body 20 includes a second side surface 20c facing the top surface 12c of the case main body 12. The first side surface 20a and the second side surface 20c are a pair of side surfaces that face each other. Additionally, the electrode body 20 includes a pair of main surfaces facing the pair of long side surfaces 12b of the case main body 12. The electrode body 20 includes a pair of side surfaces facing the first sealing plate 14 and the second sealing plate 16.

The separator 25 has a band-like shape. That is to say, the separator 25 has an elongated shape. The separator 25 is bent in a zigzag manner. Specifically, the separator 25 is folded alternately at end parts of the positive electrodes 23 and end parts of the negative electrodes 24. Therefore, as illustrated in FIG. 5, the separator 25 includes a flat part along the electrode and a bent part that is folded at the end part of the electrode. Thus, each of the positive electrodes 23 is sandwiched by the separator 25 and each of the negative electrodes 24 is sandwiched by the separator 25. Since the separator 25 has a zigzag shape, the manufacturing efficiency of the stacked-type electrode body can be increased.

In view of this, about the bent parts of the separator 25, as illustrated in FIG. 5, first bent parts 25a folded at the end parts of the positive electrodes 23 and second bent parts 25b folded at the end parts of the negative electrodes 24 are defined. As illustrated in FIG. 6, the first bent parts 25a are disposed on a side of the second side surface 20c facing the top surface 12c of the case main body 12. Portions of the first bent parts 25a that face the top surface 12c are directed to the outside of the electrode body 20 and form outer surfaces of the first bent parts 25a. The second bent parts 25b are disposed on a side of the first side surface 20a facing the bottom surface 12a of the case main body 12. Portions of the second bent parts 25b that face the bottom surface 12a are directed to the outside of the electrode body 20 and form outer surfaces of the second bent parts 25b.

In this embodiment, in the electrode body 20, the separator 25 is present at both outermost surfaces in the direction where the positive electrodes 23 and the negative electrodes 24 are stacked. With such a structure, the negative electrode 24, which is the electrode on the outermost side in the electrode body 20, is covered with the separator 25, that is, not exposed; therefore, the damage on the negative electrode 24 can be suppressed. Even in a case where a part of the negative electrode active material layer is detached due to the damage of the negative electrode 24, the separator 25 can suppress the movement of the fragment detached from the negative electrode active material layer inside the secondary battery 100. In this manner, in the secondary battery 100 according to this embodiment, in the electrode body 20, the damage or fall of the active material layer (in the illustrated example, the negative electrode active material layer) of the electrode plate (in the illustrated example, the negative electrode 24) that exists on the outermost side in the direction where the positive electrodes 23 and the negative electrodes 24 are stacked can be suppressed and even if the active material layer falls, the short-circuit due to the fallen active material layer can be suppressed.

On the other hand, in the secondary battery, the impregnation of the electrode body with the electrolyte solution needs to be improved. In the on-vehicle battery, in particular, enlarging the secondary battery to extend the cruising distance of the vehicle results in an extension of time of impregnating the electrode body with the electrolyte solution at the manufacture of the secondary battery (that is, the liquid injecting property becomes lower), which leads to a problem of lower production efficiency. When the secondary battery is repeatedly charged and discharged at a high rate, the electrolyte solution is discharged out of the electrode body due to expansion/contraction of the active material layer and this makes it easy for the lithium ion concentration in the electrode body to become inhomogeneous, which is a problem. Accordingly, in the on-vehicle battery, it is desired to improve the impregnation of the electrode body with the electrolyte solution.

In view of this, in this embodiment, the outer surfaces of the second bent parts 25b are not covered with the separator 25. Therefore, between the adjacent second bent parts 25b, an end part of the positive electrode active material layer of the positive electrode 23 is exposed. Therefore, the electrolyte solution easily enters the electrode body 20 from this exposed end part of the positive electrode active material layer. Accordingly, in the secondary battery 100, the impregnation of the electrode body 20 with the electrolyte solution is largely increased.

In addition, there is another advantage that the gas generated in the electrode body 20 is easily discharged out of the electrode body 20 from this exposed end part of the positive electrode active material layer. In the example illustrated in FIG. 6, the gas exhaust valve 13 is provided on the outer surface side of the second bent part 25b, in other words, on the bottom surface 12a side of the case main body 12. In this case, when a large amount of gas is generated inside the electrode body 20, a large amount of generated gas is allowed to be easily discharged out of the battery case 10 through the gas exhaust valve 13, which is particularly advantageous.

It should be noted that in the illustrated example, the electrode body 20 is accommodated in the battery case 10 so that the second side surface 20c of the electrode body 20 existing on the side where the first bent part 25a is disposed faces the top surface 12c of the case main body 12 and the first side surface 20a of the electrode body 20 where the second bent part 25b is disposed faces the bottom surface 12a of the case main body 12. However, the direction of the electrode body 20 when the electrode body 20 is accommodated in the battery case 10 is not limited to the direction illustrated in the drawing.

However, the electrolyte solution includes the electrolyte solution permeated into the electrode body 20 and a surplus solution that is not permeated into the electrode body 20. The surplus solution exists between the battery case 10 and the electrode body 20. Therefore, the surplus solution exists on the first side surface 20a side of the electrode body 20 facing the bottom surface 12a of the case main body 12. Therefore, in the case where the first side surface 20a of the electrode body 20 exists on the side where the first bent part 25a is disposed as illustrated in the example in FIG. 6, the surplus solution easily permeates through the exposed end part of the positive electrode active material layer of the positive electrode 23; thus, the impregnation of the electrode body 20 with the electrolyte solution becomes particularly high.

As illustrated in FIG. 5, in this embodiment, a tip end 25e on a cover part 25c side in a longitudinal direction of the separator 25 is disposed on one main surface of the pair of main surfaces of the electrode body 20 that face each other. In this case, the layer stacking displacement of the positive electrodes 23, the negative electrodes 24, and the separator 25 in the electrode body 20 can be suppressed more certainly as a whole. The tip end 25e of the separator 25 on the cover part 25c side is desirably in a region where the positive electrode 23 and the negative electrode 24 face each other. In particular, in the illustrated example, since the width of the negative electrode 24 is larger than the width of the positive electrode 23, the negative electrode 24 includes a region not facing the positive electrode 23 at an edge part thereof and a region facing the positive electrode 23 at a central part thereof. Therefore, since the tip end 25e of the separator 25 on the cover part 25c side exists in the region where the positive electrode 23 and the negative electrode 24 face each other, the layer stacking displacement can be suppressed more easily.

In this embodiment, in the separator 25, a region 25d of the separator 25 that exists on the tip end 25e side relative to the cover part 25c (in other words, a region of the separator 25 that is folded from an end part of the cover part 25c along the main surface of the electrode body 20) is bonded to a region existing on the inside of the region 25d that exists on the tip end 25e side relative to the cover part 25c (that is, on the electrode body 20 side). The region that exists on the inside is a region of the separator 25 that, in the electrode body 20, exists on an inner layer side of the region 25d existing on the tip end 25e side relative to the cover part 25c. In other words, the region existing on the inside is a part of the separator 25 that covers the negative electrode 24 of the outermost layer in the electrode multilayer structure included in the electrode body 20. In this case, the region 25d that exists on the tip end side relative to the cover part 25c can be efficiently fixed to the electrode body 20. That is to say, the separator 25 is fixed easily.

At this time, desirably, the region 25d that exists on the tip end 25e side relative to the cover part 25c is fixed to the inside of the region 25d that exists on the tip end 25e side in the separator 25 without the use of a tape. Therefore, the tape is not pasted on the main surface of the electrode body 20. In this case, the generation of a large step difference part that is caused by the thickness of the tape can be suppressed. In a case where the electrode body 20 of the secondary battery 100 expands so that the electrode body 20 is brought into contact with the battery case 10 or in the case where the secondary battery 100 is used with the pressure applied in the thickness direction thereof, the difference may be generated in pressure applied to the electrode body 20 by the step difference part due to the thickness of the tape. This pressure difference can cause the battery reaction to be inhomogeneous or cause the lithium precipitation. Therefore, not using the tape as described above can prevent the formation of the step difference part due to the thickness of the tape, making it possible to obtain the effects that the homogeneity of the battery reaction is improved and the lithium precipitation is suppressed.

Examples of specific methods for fixing the region 25d of the separator 25 existing on the tip end 25e side without using the tape include a method of using an adhesive, particularly a method of press-bonding. In the case of performing the press-bonding, the separator 25 desirably includes an adhesive layer to be described below. It should be noted that an adhesive may be applied only to a part where the separator 25 is fixed. The press-bonding may be performed at either normal temperature or high temperature (for example, 50°C to 100°C).

Alternatively, the tip end 25e of the separator 25 on the cover part 25c side may be disposed on one side surface out of the pair of side surfaces of the electrode body 20 that face each other. In this case, it is possible to suppress the step difference generated due to the separator 25 on the main surface of the electrode body 20.

In this embodiment, since it is the first bent part 25a that is folded in the separator 25 at the end part of the positive electrode 23, the separator 25 includes the cover part 25c that covers the outer surfaces of the first bent parts 25a. Therefore, on the side of the side surface 20c of the electrode body 20, the outer side of the part where the end part of the negative electrode active material layer of the negative electrode 24 is exposed is covered with the cover part 25c of the separator 25. Accordingly, even when a part of the negative electrode active material layer of the negative electrode 24 is detached, the cover part 25c of the separator 25 can suppress the large movement of the detached fragment of the negative electrode active material layer from the detached position. As a result, the occurrence of the short-circuit due to the detached fragment of the negative electrode active material layer can be effectively suppressed.

It should be noted that in the lithium ion secondary battery, a part of the active material layer is detached much more easily in the negative electrode than in the positive electrode. Therefore, by this embodiment, even if a part of the negative electrode active material layer, which is detached more easily, is detached, the short-circuit due to the detached negative electrode active material layer can be suppressed more effectively.

Next, the materials of the positive electrode 23, the negative electrode 24, and the separator 25 are described. The positive electrode 23 typically includes a positive electrode current collector, and the positive electrode active material layer fixed on at least one surface of the positive electrode current collector. The positive electrode current collector is formed of a conductive metal such as aluminum, an aluminum alloy, nickel, or stainless steel. The positive electrode current collector is a metal foil here, specifically an aluminum foil. In this embodiment, the positive electrode 23 includes the part where the positive electrode current collector is exposed without the formation of the positive electrode active material layer and this exposed part forms the current collection tab. However, the method of forming the current collection tab is not limited to this method.

The positive electrode active material layer contains the positive electrode active material capable of storing and releasing charge carriers reversibly. As the positive electrode active material, an oxide containing at least one kind of Ni, Co, and Mn is desirable, and examples thereof include lithium transition metal composite oxides such as lithium cobaltate, lithium manganate, lithium nickelate, a lithium nickel manganese composite oxide, and a lithium nickel cobalt manganese composite oxide. The positive electrode active material is more desirably a lithium composite oxide containing Ni (in other words, Ni-containing lithium composite oxide). It is desirable that the Ni content in the Ni-containing lithium composite oxide is in the range of 70 to 100 mol% relative to the total mole of metals excluding Li. It should be noted that in the lithium transition metal composite oxide, a part of Ni, Co, and Mn may be replaced by Al, Ti, Zr, P, B, Si, Nb, C, or the like. Moreover, in the positive electrode active material, a particle surface of the lithium transition metal composite oxide may be covered with a compound containing Al, Ti, Zr, W, P, B, Si, Nb, C, or the like. The replacement amount and the addition amount thereof are about 0.1 to 7 mass% in total. On the other hand, a lithium transition metal phosphate compound such as lithium iron phosphate can also be used as the positive electrode active material. The positive electrode active material layer may contain a conductive material, a binder, or the like. It should be noted that a carbon material such as carbon black or carbon nanotube is desirable as the conductive material. As the binder, a resin binder such as polyvinylidene fluoride is desirable.

The negative electrode 24 typically includes a negative electrode current collector, and a negative electrode active material layer fixed on at least one surface of the negative electrode current collector. The negative electrode current collector is formed of a conductive metal such as copper, a copper alloy, nickel, or stainless steel. The negative electrode current collector is a metal foil here, specifically a copper foil. In this embodiment, the negative electrode 24 includes the part where the negative electrode current collector is exposed without the formation of the negative electrode active material layer and this exposed part forms the current collection tab. However, the method of forming the current collection tab is not limited to this method.

The negative electrode active material layer contains the negative electrode active material capable of storing and releasing charge carriers reversibly. Examples of the negative electrode active material include carbon-based negative electrode active materials such as graphite, hard carbon, and soft carbon, Si-based negative electrode active materials such as Si and silicate, a silicon-carbon composite negative electrode active material, a Sn-based negative electrode active material such as Sn, and the like. The negative electrode active material layer may contain a conductive material, a thickener, a binder, or the like. As the binder, styrene butadiene rubber, carboxymethyl cellulose, or the like is desirably contained.

The separator 25 is a member that insulates between the positive electrode active material layer and the negative electrode active material layer. As the separator 25, for example, a porous resin sheet made of a polyolefin resin such as polyethylene (PE) or polypropylene (PP) is desirable. The porous resin sheet may have either a single-layer structure or a multilayer structure (for example, three-layer structure of PP/PE/PP).

On a surface of the separator 25, an adhesive layer is desirably provided. For example, the adhesive layer contains an adhesive resin such as acrylic resin or polyvinylidene fluoride. If the separator 25 includes the adhesive layer, the layer stacking displacement between the separator 25 and the electrode can be easily suppressed. The adhesive layer may be provided on the entire surface of the separator 25 or may be applied in pattern.

On a surface of the separator 25, a heat resistance layer (HRL) including ceramic particles may be provided. As a material of the ceramic particles, for example, alumina, boehmite, aluminum hydroxide, titania, or the like is given. The heat resistance layer desirably further contains a resin binder. The resin binder may be an adhesive resin such as acrylic resin or polyvinylidene fluoride. Adding a suitable amount of resin binder to the heat resistance layer makes it possible for the heat resistance layer to function as the adhesive layer.

In one embodiment of the separator 25, the separator 25 includes a base material of the porous resin sheet and the adhesive layer on each surface of the base material. In another embodiment of the separator 25, the separator 25 includes the base material of the porous resin sheet, the adhesive layer on one surface of the base material, and the heat resistance layer on the other surface of the base material. In this embodiment, the heat resistance layer may have a function of the adhesive layer. In still another embodiment of the separator 25, the separator 25 includes the base material of the porous resin sheet, the adhesive layer on one surface of the base material, the heat resistance layer on the other surface of the base material, and another adhesive layer on this heat resistance layer.

### <Insulating sheet>

As illustrated in FIG. 4 and FIG. 6, the insulating sheet 50 is accommodated inside the battery case 10 together with the electrode body 20. The insulating sheet 50 is disposed between the battery case 10 and the electrode body 20. The insulating sheet 50 covers the periphery of the electrode body 20. It is desirable that the insulating sheet 50 covers at least the main surfaces, the first side surface 20a, and the second side surface 20c of the electrode body 20.

The insulating sheet 50 is formed of an insulating material, and desirably formed of resin. Examples of the resin include: olefin resins such as polyethylene (PE), polypropylene (PP), and polymethyl pentene (PMP/TPX (registered trademark)); polyester resins such as polyethylene terephthalate (PET) and polyethylene naphthalate (PEN); acrylic resin (PMMA); polyimide (PI); polyphenylene ether (PPE); triacetate (TAC); polyphenylene sulfide resin (PPS); polycarbonate (PC); nylon; fluorine resins such as polytetrafluoroethylene (PTFE); and the like. Among these, PE and PP are desirable.

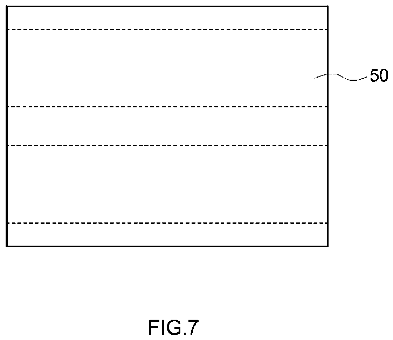

FIG. 7 is a developed view of the insulating sheet 50. In this embodiment, the insulating sheet 50 is formed of one sheet-shaped member. This sheet-shaped member is bent into a rectangular tubular shape to correspond to the shape of the electrode body 20, so that the insulating sheet 50 is configured. As illustrated in FIG. 6, there is an overlap part 50a at both ends in a circumferential direction of the electrode body 20, and in this overlap part 50a, sheet end parts that are bent overlap with each other. In this insulating sheet 50, both ends of the bent sheet are fixed together by bonding or the like at this overlap part 50a. The bonding can be performed by, for example, welding such as thermal welding or ultrasonic welding, adhesion by an adhesive, or fixing by a sticky tape, or the like. At this overlap part 50a, both ends of the bent sheet may be bonded together only partially. For example, a total of two places of both ends of the overlap part 50a are bonded together or a total of three places of a center part and both ends of the overlap part 50a are bonded together. In this overlap part 50a, the entire length of the overlap part 50a may be bonded together.

Here, in this embodiment, the overlap part 50a of the insulating sheet 50 includes a region where the electrolyte solution and the gas can pass. This case is advantageous from the viewpoints of high impregnation of the electrode body 20 with the electrolyte solution and rapid discharging of the gas from the electrode body 20. The region where the electrolyte solution and the gas can pass can be provided by bonding just a part of the overlap part 50a. That is to say, a part of the overlap part 50a that is not bonded serves as the region where the electrolyte solution and the gas can pass. Alternatively, the region where the electrolyte solution and the gas can pass can be provided by, for example, providing a penetration hole in the insulating sheet while bonding the entire length of the overlap part 50a. When the entire length of the overlap part 50a in an extending direction of the overlap part 50a is L, the region where the electrolyte solution and the gas can pass in the overlap part 50a has a size of desirably 1/5L or more, more desirably 1/3L or more, and still more desirably 1/2L or more. The region where the electrolyte solution and the gas can pass in the overlap part 50a of the insulating sheet 50 may be normally open or may be open upon subjection to stress.

In this embodiment, the overlap part 50a of the insulating sheet 50 faces the first side surface 20a, which is the side where the second bent part 25b of the electrode body 20 exists. In the second bent part 25b, the positive electrode active material layer of the positive electrode 23 is exposed and the impregnation of the electrode body with the electrolyte solution is increased. Therefore, the case in which the overlap part 50a faces the first side surface 20a is advantageous in point of further increasing the impregnation of the electrode body with the electrolyte solution. In this case, the provision of the region where the electrolyte solution and the gas can pass in the overlap part 50a of the insulating sheet 50 is more advantageous.

In this embodiment, the overlap part 50a of the insulating sheet 50 exists on the side of the bottom surface 12a of the case main body 12 of the battery case 10. Since the surplus solution of the electrolyte solution that has not permeated into the electrode body 20 exists on the bottom surface 12a side of the case main body 12 in the battery case 10, the arrangement of the overlap part 50a so as to face the bottom surface 12a is advantageous in supplying this surplus solution to the electrode body 20. Therefore, in this embodiment, the overlap part 50a of the insulating sheet 50 is desirably present on the side where the surplus solution of the electrolyte solution exists. At this time, it is more advantageous that the overlap part 50a of the insulating sheet 50 includes the region where the electrolyte solution can pass. It should be noted that the overlap part 50a of the insulating sheet 50 may face other surface than the bottom surface 12a of the case main body 12 of the battery case 10.

In this embodiment, the overlap part 50a faces the bottom surface 12a of the case main body 12 including the gas exhaust valve 13. In this manner, the overlap part 50a desirably faces the surface of the battery case 10 that includes the gas exhaust valve 13. In this case, in the sudden generation of the gas in the electrode body 20, the gas can be easily released out of the battery case 10 through the gas exhaust valve 13. At this time, it is more advantageous that the overlap part 50a of the insulating sheet 50 includes the region where the gas can pass. It should be noted that the overlap part 50a of the insulating sheet 50 may face the surface of the case main body 12 of the battery case 10 that does not have the gas exhaust valve 13.

### <Electrolyte solution>

The electrolyte solution is accommodated inside the battery case 10 together with the electrode body 20. The electrolyte solution may be the same as or similar to that in the general secondary battery without particular limitations. The electrolyte solution is typically a nonaqueous liquid electrolyte (that is, nonaqueous electrolyte solution) including a nonaqueous solvent and a supporting salt. Examples of the nonaqueous solvent include carbonates such as ethylene carbonate (EC), ethyl methyl carbonate (EMC), and dimethyl carbonate (DMC). The nonaqueous solvent is desirably formed by mixing EC, EMC, and DMC each within 1 to 99 vol% so that the total ratio becomes 100 vol%. The nonaqueous solvent may further contain carboxylic acid esters such as methyl acetate. The supporting salt is also called an electrolyte salt and is, for example, a fluorine-containing lithium salt. Examples of the fluorine-containing lithium salt include LiPF₆, LiBF₄, and lithium bis(fluorosulfonyl)imide (LiFSI), and the like. The supporting salt desirably contains LiPF₆. The concentration of the supporting salt is not limited in particular and is desirably 0.6 to 1.8 mol/L and more desirably 0.7 to 1.3 mol/L. The electrolyte solution may further contain an additive, specifically, for example, a film formation agent such as vinylene carbonate (VC) or an oxalato complex, a gas generating agent, a thickener, or the like.

The secondary battery 100 is usable in various applications. Suitable applications include the applications for vehicles, specifically a driving power source mounted on a vehicle such as a battery electric vehicle (BEV), a hybrid electric vehicle (HEV), or a plug-in hybrid electric vehicle (PHEV). In addition, the secondary battery 100 can be used as an electrical energy storage battery such as a small electrical energy storage device. The secondary battery 100 can also be used in a mode of a battery module in which a plurality of the secondary batteries 100 are connected in series and/or in parallel typically.

The specific examples of the present disclosure have been described above in detail; however, these are examples and will not limit the scope of claims. The techniques described in the scope of claims include those in which the specific examples exemplified above are variously modified and changed.

That is to say, the following Items [1] to [10] are given as the secondary battery according to the present disclosure.
Item 1: The secondary battery including: the electrode body that includes the plurality of first electrode plates, the plurality of second electrode plates with the polarity different from the polarity of the first electrode plates, and the separator disposed between the first electrode plate and the second electrode plate; the electrolyte solution; and the case that accommodates the electrode body and the electrolyte solution, in which the separator has the band-like shape and is bent in a zigzag manner, the separator includes the first bent part folded at the end part of the first electrode plate and the second bent part folded at the end part of the second electrode plate, the plurality of first bent parts are disposed on one side surface side of the pair of side surfaces of the electrode body that face each other, the plurality of second bent parts are disposed on the other side surface side of the pair of side surfaces of the electrode body that face each other, the separator includes the cover part that covers the outer surfaces of the plurality of first bent parts, the outer surfaces of the second bent parts are not covered with the separator, and in the electrode body, the separator exists on both outermost surfaces in the direction where the first electrode plates and the second electrode plates are stacked. Item 2: The secondary battery according to Item 1, in which the case includes the pair of first surfaces facing each other, the pair of second surfaces facing each other, and the pair of third surfaces facing each other, the first bent part and the cover part are disposed on one side of the pair of first surfaces, and the second bent part is disposed on the other side of the pair of first surfaces.
Item 3: The secondary battery according to Item 2, in which the gas exhaust valve that fractures when the pressure inside the case reaches the predetermined value or more and discharges the gas in the case to the outside of the case is provided on the other side of the pair of first surfaces.
Item 4: The secondary battery according to Item 2 or 3, in which the electrolyte solution includes the surplus solution that exists between the case and the electrode body, and the surplus solution exists on the other side of the pair of first surfaces.
Item 5: The secondary battery according to any one of Items 2 to 4, in which the outer surface of the electrode body is covered with the insulating sheet, the insulating sheet includes the overlap part of the insulating sheet on the other side of the pair of first surfaces, and the overlap part includes the region where the electrolyte solution and the gas can pass.
Item 6: The secondary battery according to any one of Items 1 to 5, in which the electrode body includes the first electrode tab electrically connected to the first electrode plate at one end part and the second electrode tab electrically connected to the second electrode plate at the other end part, the case includes the case main body that includes the first opening at one end part and the second opening at the other end part, the first sealing plate that seals the first opening, and the second sealing plate that seals the second opening, and the first electrode terminal electrically connected to the first electrode plate is provided at the first sealing plate and the second electrode terminal electrically connected to the second electrode plate is provided at the second sealing plate.
Item 7: The secondary battery according to any one of Items 1 to 6, in which in the longitudinal direction of the separator, the tip end on the side of the cover part is disposed on one main surface of the pair of main surfaces of the electrode body that face each other.
Item 8: The secondary battery according to Item 7, in which in the separator, the region that is positioned on the side of the tip end relative to the cover part is bonded to the region that exists inside the region that is positioned on the side of the tip end relative to the cover part. Item 9: The secondary battery according to Item 8, in which in the separator, the region that is positioned on the side of the tip end relative to the cover part is fixed without using the tape to the inside of the region that is positioned on the side of the tip end relative to the cover part.
Item 10: The secondary battery according to any one of Items 1 to 6, in which in the longitudinal direction of the separator, the tip end on the side of the cover part is disposed on one side surface of the pair of side surfaces of the electrode body that face each other.

## Claims

1. A secondary battery (100) comprising:
an electrode body (20) that includes a plurality of first electrode plates (23), a plurality of second electrode plates (24) with a polarity different from a polarity of the first electrode plates (23), and a separator (25) disposed between the first electrode plate (23) and the second electrode plate (24);
an electrolyte solution; and
a case (10) that accommodates the electrode body (20) and the electrolyte solution, wherein
the separator (25) has a band-like shape and is bent in a zigzag manner,
the separator (25) includes a first bent part (25a) folded at an end part of the first electrode plate (23) and a second bent part (25b) folded at an end part of the second electrode plate (24),
a plurality of the first bent parts (25a) are disposed on one side surface side of a pair of side surfaces of the electrode body (20) that face each other,
a plurality of the second bent parts (25b) are disposed on the other side surface side of the pair of side surfaces of the electrode body (20) that face each other,
the separator (25) includes a cover part (25c) that covers outer surfaces of the plurality of first bent parts (25a),
outer surfaces of the second bent parts (25b) are not covered with the separator (25), and
in the electrode body (20), the separator (25) exists on both outermost surfaces in a direction where the first electrode plates (23) and the second electrode plates (24) are stacked.

2. The secondary battery (100) according to claim 1, wherein
the case (10) includes a pair of first surfaces facing each other, a pair of second surfaces facing each other, and a pair of third surfaces facing each other,
the first bent part (25a) and the cover part (25c) are disposed on one side of the pair of first surfaces, and
the second bent part (25b) is disposed on the other side of the pair of first surfaces.

3. The secondary battery (100) according to claim 2, wherein a gas exhaust valve (13) that fractures when pressure inside the case (10) reaches a predetermined value or more and discharges a gas in the case (10) to outside of the case (10) is provided on the other side of the pair of first surfaces.

4. The secondary battery (100) according to claim 2, wherein
the electrolyte solution includes a surplus solution that exists between the case (10) and the electrode body (20), and
the surplus solution exists on the other side of the pair of first surfaces.

5. The secondary battery (100) according to claim 2, wherein
an outer surface of the electrode body (20) is covered with an insulating sheet (50),
the insulating sheet (50) includes an overlap part (50a) of the insulating sheet (50) on the other side of the pair of first surfaces, and
the overlap part (50a) includes a region where the electrolyte solution and a gas can pass.

6. The secondary battery (100) according to claim 1, wherein
the electrode body (20) includes a first electrode tab electrically connected to the first electrode plate (23) at one end part and a second electrode tab electrically connected to the second electrode plate (24) at the other end part,
the case (10) includes a case main body (12) that includes a first opening (12e) at one end part and a second opening (12f) at the other end part, a first sealing plate (14) that seals the first opening (12e), and a second sealing plate (16) that seals the second opening (12f), and
a first electrode terminal (30) electrically connected to the first electrode plate (23) is provided at the first sealing plate (14) and a second electrode terminal (40) electrically connected to the second electrode plate (24) is provided at the second sealing plate (16).

7. The secondary battery (100) according to claim 1, wherein in a longitudinal direction of the separator (25), a tip end (25e) on a side of the cover part (25c) is disposed on one main surface of a pair of main surfaces of the electrode body (20) that face each other.

8. The secondary battery (100) according to claim 7, wherein in the separator (25), a region (25d) that is positioned on a side of the tip end (25e) relative to the cover part (25c) is bonded to a region that exists inside the region (25d) that is positioned on the side of the tip end (25e) relative to the cover part (25c).

9. The secondary battery (100) according to claim 8, wherein in the separator (25), the region (25d) that is positioned on the side of the tip end (25e) relative to the cover part (25c) is fixed without using a tape to inside of the region (25d) that is positioned on the side of the tip end (25e) relative to the cover part (25c).

10. The secondary battery (100) according to claim 1, wherein in a longitudinal direction of the separator (25), a tip end (25e) on a side of the cover part (25c) is disposed on one side surface of the pair of side surfaces of the electrode body (20) that face each other.
